# EUROPÄISCHE PATENTANMELDUNG

(11) **EP 2 390 281 A1**
(43) Veröffentlichungstag der Anmeldung: **30.11.2011**
(21) Anmeldenummer: 10163853.4
(22) Anmeldetag: 26.05.2010
(51) Int. Cl.: C08K 3/00

(54) **Verstärkte thermoplastische Formmassen auf Basis von Polyarylenethern**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft thermoplastische Formmassen bestehend aus folgenden Komponenten:
(A) mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette,
(B) mindestens ein faser- oder teilchenförmiger Füllstoff und
(C) optional weitere Zusatzstoffe und/oder Verarbeitungshilfsmittel.

Darüber hinaus betrifft die vorliegende Erfindung ein Verfahren zur Herstellung der erfindungsgemäßen thermoplastischen Formmassen, deren Verwendung zur Herstellung von Formteilen, Fasern, Schäumen oder Filmen und die so erhältlichen Formteile, Fasern, Schäume und Filme.

## Beschreibung

Die vorliegende Erfindung betrifft thermoplastische Formmassen bestehend aus folgenden Komponenten:
(A) mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette,
(B) mindestens ein faser- oder teilchenförmiger Füllstoff und
(C) optional weitere Zusatzstoffe und/oder Verarbeitungshilfsmittel.

Darüber hinaus betrifft die vorliegende Erfindung ein Verfahren zur Herstellung der erfindungsgemäßen thermoplastischen Formmassen, deren Verwendung zur Herstellung von Formteilen, Fasern, Schäumen oder Filmen und die so erhältlichen Formteile, Fasern, Schäume und Filme.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen. Polyarylenether sind amorph und weisen daher oft eine unzureichende Beständigkeit gegenüber aggressiven Medien auf. Weiterhin weisen Polyarylenether auch eine hohe Schmelzeviskosität auf, was besonders die Verarbeitung zu großen Formteilen mittels Spritzguss beeinträchtigt. Die hohe Schmelzeviskosität ist insbesondere nachteilig bei der Herstellung von Formmassen mit hoher Füllstoff- oder Faserbeladung.

Die Verarbeitung zu komplexen Bauteilen erfordert vielfach eine deutliche Erhöhung der Massetemperatur beim Spritzguss auf 390 bis 410°C, was in vielen Fällen zu einer unerwünschten Verschlechterung der Verarbeitungseigenschaften der Produkte führt. Die Neigung zu unerwünschten Nebenreaktionen in der Schmelze, die insbesondere zu Molekulargewichtsaufbau und/oder Vernetzung führen, wird durch die sogenannte Schmelzestabilität charakterisiert. Ein quantitatives Kennzeichen für die Schmelzestabilität ergibt sich insbesondere aus dem Verhältnis der Volumenfließrate der Schmelze (MVR), bestimmt bei zwei unterschiedlichen Verweilzeiten bei gegebener Temperatur.

Die US 2003/0022964 A1 offenbart mit Glasfasern verstärkte thermoplastische Formmassen auf Basis von Polyarylenethersulfonen. Die Glasfasern wurden vorab mit einem Polyolefinwachs behandelt. Die Anmeldung offenbart keine Lehre in Bezug auf die Endgruppen der Polyarylenethersulfone.

Die WO 03/033565 A1 offenbart thermoplastische Formmassen auf Basis von Polyarylenethersulfonen mit verbesserter Schmelzestabilität. Zu diesem Zweck werden den Formmassen Polyarylenethersulfone mit Einheiten, die sich von 1,1,1-Tris(4-hydroxyphenyl)ethan ableiten, zugesetzt. Die Formmassen können optional Füllstoffe enthalten. Die Anmeldung offenbart keine Lehre in Bezug auf die Endgruppen der Polyarylenethersulfone.

Aus der EP-A 855 430 sind faserverstärkte Polyarylenether bekannt, welche funktionalisierte Polyarylenether zur Verbesserung der Zähigkeit enthalten. Neben verbesserter Zähigkeit zeigen diese Produkte auch eine verbesserte Schmelzestabilität. Die thermoplastischen Formmassen der EP-A 855 430 weisen nicht für alle Anwendungen ausreichende Verarbeitungseigenschaften auf. Insbesondere die Schmelzestabilität ist weiter verbesserungsbedürftig. Die Anmeldung offenbart keine Lehre in Bezug auf die Endgruppen der Polyarylenethersulfone.

Die Aufgabe der vorliegenden Erfindung bestand demzufolge darin, verstärkte thermoplastische Formmassen auf Basis von Polyarylenethern bereitzustellen, welche die vorgenannten Nachteile nicht oder in geringerem Umfang aufweisen.

Aufgabe der vorliegenden Erfindung war insbesondere, verstärkte thermoplastische Formmassen auf Basis von Polyarylenethern zur Verfügung zu stellen, die gegenüber dem Stand der Technik eine verbesserte Verarbeitungsstabilität auch bei hohen Fasergehalten aufweisen. Dabei sollten die thermoplastischen Formmassen insbesondere eine hohe Schmelzestabilität aufweisen. Gleichzeitig sollten die thermoplastischen Formmassen gute mechanischen Eigenschaften, insbesondere eine hohe Schlagzähigkeit, eine hohe Reißdehnung und eine hohe Reißfestigkeit aufweisen.

Die vorgenannten Aufgaben werden gelöst durch die erfindungsgemäßen thermoplastischen Formmassen. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Die erfindungsgemäßen thermoplastischen Formmassen bestehen aus folgenden Komponenten:
(A) mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette,
(B) mindestens ein faser- oder teilchenförmiger Füllstoff und
(C) optional weitere Zusatzstoffe und/oder Verarbeitungshilfsmittel.

Die erfindungsgemäßen thermoplastischen Formmassen bestehen dabei bevorzugt aus 15 bis 98 Gew.-% der Komponente (A1), von 1 bis 15 Gew.-% der Komponente (A2), von 1 bis 70 Gew.-% der Komponente (B) und von 0 bis 40 Gew.-% der Komponente (C), wobei die Summe der Gew.-% der Komponenten (A) bis (C) 100 Gew.-% ergibt.

Die erfindungsgemäßen thermoplastischen Formmassen bestehen besonders bevorzugt aus 20 bis 92 Gew.-% der Komponente (A1), von 3 bis 20 Gew.-% der Komponente (A2), von 5 bis 60 Gew.-% der Komponente (B) und von 0 bis 40 Gew.-% der Komponente (C), wobei die Summe der Gew.-% der Komponenten (A) bis (C) 100 Gew.-% ergibt.

Die thermoplastischen Formmassen werden vorzugsweise durch Compoundierung, d. h. durch Vermischen der Komponenten in einem fließfähigen Zustand hergestellt. Entsprechend ist die Formulierung "thermoplastische Formmassen bestehend aus folgenden Komponenten" vorzugsweise gleichzusetzen mit "thermoplastische Formmassen erhältlich durch Compoundierung der folgenden Komponenten".

Die Verwendung von Polyarylenethern mit hohem Anteil an phenolischen Endgruppen zur Erhöhung der Schmelzestabilität von thermoplastischen Formmassen ist unter anderem deshalb überraschend, weil der Fachmann mit nachteiligen Nebenreaktionen der reaktiven Gruppen rechnen würde. Aufgrund der Reaktivität der phenolischen Endgruppen finden derartige Polyarylenethersulfone beispielsweise als Reaktivkomponente für Epoxidharze Verwendung.

Die einzelnen Komponenten werden im Folgenden näher erläutert.

### Komponente A

Erfindungsgemäß enthalten die thermoplastischen Formmassen mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette. Der Ausdruck "im Mittel" bedeutet dabei ein Zahlenmittel.

Die erfindungsgemäßen thermoplastischen Formmassen enthalten dabei vorzugsweise mindestens 15 Gew.-%, besonders bevorzugt mindestens 20 Gew.-%, insbesondere mindestens 25 Gew.-% der Komponente (A1) und vorzugsweise mindestens 1 Gew.-%, besonders bevorzugt mindestens 3 Gew.-%, insbesondere mindestens 4 Gew.-% der Komponente (A2), jeweils bezogen auf das Gesamtgewicht der Komponenten (A) bis (C).

Die erfindungsgemäßen thermoplastischen Formmassen enthalten außerdem vorzugsweise höchstens 98 Gew.-%, besonders bevorzugt höchstens 92 Gew.-%, insbesondere höchstens 85 Gew.-% der Komponente (A1) und vorzugsweise höchstens 20 Gew.-%, besonders bevorzugt höchstens 15 Gew.-%, insbesondere höchstens 12 Gew.-% der Komponente (A2), jeweils bezogen auf das Gesamtgewicht der Komponenten (A) bis (C).

Unter phenolischer Endgruppe wird im Rahmen der vorliegenden Erfindung eine Hydroxygruppe verstanden, die an einen aromatischen Kern gebunden ist und die gegebenenfalls auch deprotoniert vorliegen kann. Es ist dem Fachmann bekannt, dass eine phenolische Endgruppe durch Abspaltung eines Protons infolge Einwirkung einer Base auch als sogenannte Phenolatendgruppe vorliegen kann. Der Begriff phenolische Endgruppen umfasst somit ausdrücklich sowohl aromatische OH- als auch Phenolatgruppen.

Es ist für den Fachmann außerdem offensichtlich, dass die phenolischen Endgruppen reaktiv sind und in den thermoplastischen Formmassen in mindestens teilweise umgesetzter Form vorliegen können.

Die Bestimmung des Anteils der phenolischen Endgruppen erfolgt vorzugsweise durch potentiometrische Titration der eingesetzten Polyarylenether. Hierfür wird das Polymer in Dimethylformamid gelöst und mit einer Lösung von Tetrabutylammoniumhydroxid in Toluol/Methanol titriert. Die Endpunktserfassung erfolgt potentiometrisch. Die Bestimmung des Anteils an Halogenendgruppen erfolgt vorzugsweise mittels Atomspektroskopie.

Aus dem Gewichtsanteil phenolischer Endgruppen bezogen auf das Gesamtgewicht des Polymers (m^{OH}) und dem zahlenmittleren Molekulargewicht (Mₙ^{P}) kann der Fachmann nach bekannten Methoden die mittlere Zahl an phenolischen Endgruppen pro Polymerkette (n^{OH}) unter der Annahme strikt linearer Polymerketten nach folgender Formel ermitteln: n^{OH} = m^{OH} [in Gew.-%] /100 * Mₙ^{P} [in g/mol] * 1/17.

Alternativ kann die mittlere Zahl von phenolischen Endgruppen pro Polymerkette (n^{OH}) unter Voraussetzung strikt linearer Polymerketten bei gleichzeitiger Kenntnis des Gewichtsanteils an CI-Endgruppen (m^{CI}) unter der Annahme, dass ausschließlich OH- und CI-Endgruppen vorliegen, wie folgt berechnet werden: n^{OH} = 2 / (1 + (17/35,45 * m^{CI} /m^{OH} )). Dem Fachmann ist bekannt, wie die Berechnungsweisen im Fall anderer Endgruppen als CI anzupassen sind.

Ohne sich beschränken zu wollen besteht die Vorstellung, dass die Komponente (A2) infolge ihres hohen Gehaltes an reaktiven phenolischen Endgruppen als Verträglichkeitsvermittler für die Komponenten der thermoplastischen Formmasse dient. Darüber hinaus besteht die Vorstellung, dass die Komponente (A1) mit ihrem hohen Gehalt an inerten Endgruppen das Eigenschaftsprofil der erfindungsgemäßen thermoplastischen Formmassen weiter verbessert, so dass die Anwesenheit von Polyarylenethern mit phenolischen Endgruppen einerseits und von Polyarylenethern mit inerten Endgruppen andererseits synergistisch in Bezug auf die Endeigenschaften der thermoplastischen Formmassen wirkt.

Die Herstellung von Polyarylenethern bei gleichzeitiger Steuerung der Endgruppen ist dem Fachmann bekannt und wird weiter unten näher beschrieben. Die bekannten Polyarylenether weisen üblicherweise Halogen-, insbesondere -F oder -CI, oder phenolische OH- bzw. Phenolat-Endgruppen auf, wobei letztere in bekannter Weise in stabile Endgruppen, insbesondere -OCH₃-Endgruppen, umgesetzt werden können.

Vorzugsweise weisen die Polyarylenether (A1) höchstens 0,01 Gew.-%, besonders bevorzugt höchstens 0,005 Gew.-% phenolische Endgruppen bezogen auf die Gewichtsmenge der Komponente (A1) auf. Vorzugsweise weisen die Polyarylenether (A2) mindestens 0,15 Gew.-%, insbesondere mindestens 0,18 Gew.-%, besonders bevorzugt mindestens 0,2 Gew.-% phenolische Endgruppen bezogen auf die Gewichtsmenge der Komponente (A2), jeweils berechnet als Gewichtsmenge OH, auf.

Die jeweilige theoretische Obergrenze für den Gehalt phenolischer Endgruppen in den Komponenten (A1) bzw. (A2) ergibt sich aus der Zahl der zur Verfügung stehenden Endgruppen pro Molekül (zwei im Fall linearer Polyarylenether) und der zahlenmittleren Kettenlänge. Entsprechende Berechnungen sind dem Fachmann bekannt.

Vorzugsweise beträgt die mittlere Anzahl der phenolischen Endgruppen der Komponente (A1) pro Polymerkette von 0 bis 0,1, insbesondere von 0 bis 0,08, besonders bevorzugt von 0 bis 0,05, ganz besonders bevorzugt von 0 bis 0,02, insbesondere bevorzugt höchstens 0,01.

Vorzugsweise beträgt die mittlere Anzahl der phenolischen Endgruppen der Komponente (A2) pro Polymerkette von 1,6 bis 2, insbesondere von 1,7 bis 2, besonders bevorzugt von 1,8 bis 2, ganz besonders bevorzugt von 1,9 bis 2.

In einer besonders bevorzugten Ausführungsform ist Komponente (A) eine Mischung aus von 60 bis 99 Gew.-% Polyarylenether (A1) und von 1 bis 40 Gew.-% Polyarylenether (A2), jeweils bezogen auf die Gewichtsmenge der Komponente (A).

In dieser bevorzugten Ausführungsform besteht die Komponente (A) besonders bevorzugt aus von 70 bis 98 Gew.-%, insbesondere von 80 bis 97 Gew.-%, des genannten Bestandteiles (A1) und von 2 bis 30 Gew.-%, insbesondere von 3 bis 20 Gew.-%, des genannten Bestandteils (A2), jeweils bezogen auf die Gewichtsmenge der Komponente (A).

Die Polyarylenether (A1) und (A2) gemäß der vorliegenden Erfindung können - abgesehen von den Endgruppen - gleich sein oder aus unterschiedlichen Bausteinen aufgebaut sein und/oder ein unterschiedliches Molekulargewicht aufweisen, sofern sie dann noch miteinander vollständig mischbar sind.

Es ist jedoch bevorzugt, wenn die Bestandteile (A1) und (A2) strukturell eine weitgehende Übereinstimmung aufweisen, insbesondere aus denselben Bausteinen aufgebaut sind, d. h. sich lediglich in der Art der Endgruppen unterscheiden. Außerdem ist bevorzugt, wenn die Bestandteile (A1) und (A2) ein ähnliches Molekulargewicht aufweisen und insbesondere das zahlenmittlere Molekulargewicht der einen Komponente höchstens 30% größer ist als das der anderen Komponente.

Polyarylenether sind dem Fachmann als Polymerklasse bekannt. Im Prinzip kommen alle dem Fachmann bekannten und/oder nach bekannten Methoden herstellbaren Polyarylenether als Bestandteil der Komponente (A) in Betracht. Entsprechende Methoden werden weiter unten erläutert. Vorzugsweise sind die Bestandteile der Komponente (A) Polyarylenethersulfone.

Im Rahmen der Komponente (A) bevorzugte Polyarylenether (A1) und (A2) sind unabhängig voneinander aus Bausteinen der allgemeinen Formel I aufgebaut: 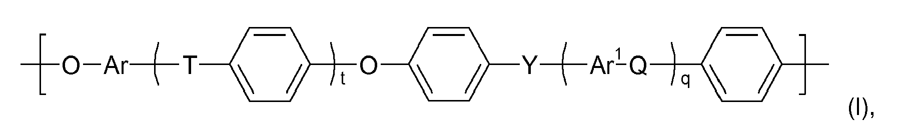 wobei die Symbole t, q, Q, T, Y, Ar und Ar¹ folgende Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, beziehungsweise, sofern t = 1, ist die Gruppe Ar-T-Phenylen vorzugsweise abgeleitet von Verbindungen der Gruppe bestehen aus Bisphenol A, Bisphenol S und 4,4'-Bisphenol. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen und Naphthylen, insbesondere 2,7-Dihydroxynaphthylen.

Im Rahmen der Komponente (A) bevorzugte Polyarylenether (A1) und (A2) sind solche, die mindestens eine der folgenden wiederkehrenden Bausteine Ia bis Io enthalten:

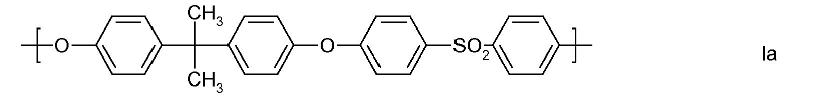

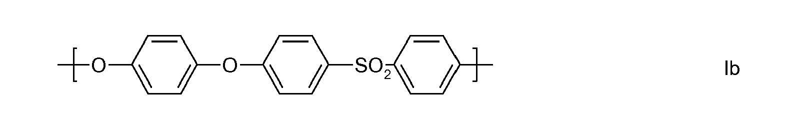

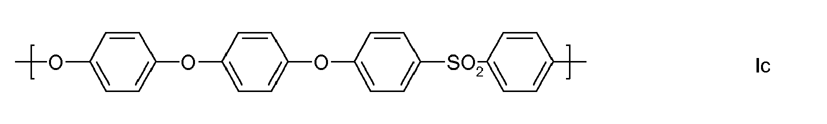

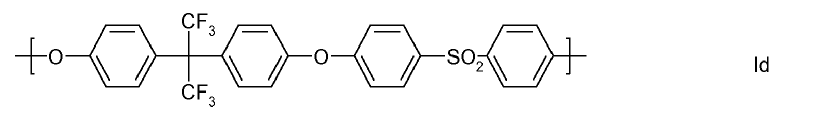

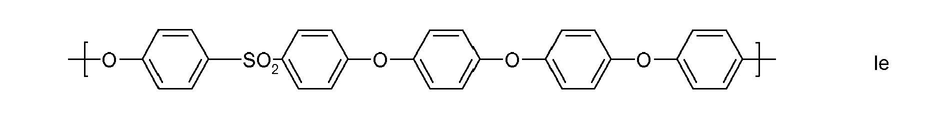

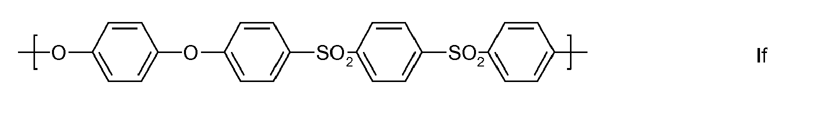

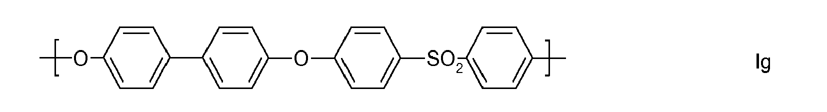

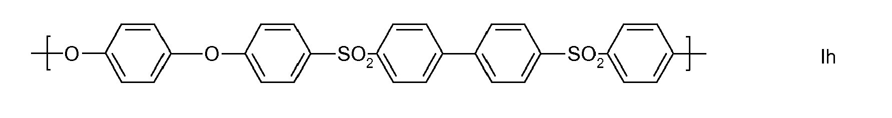

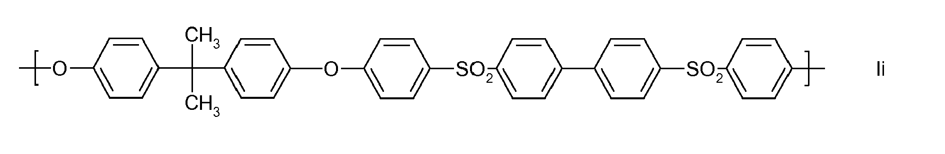

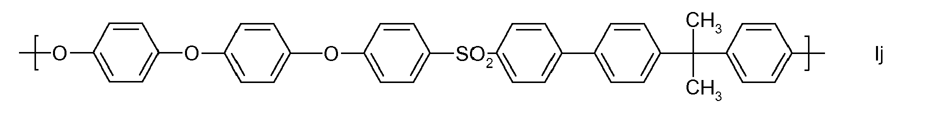

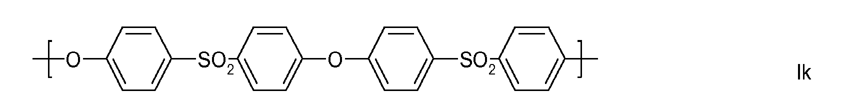

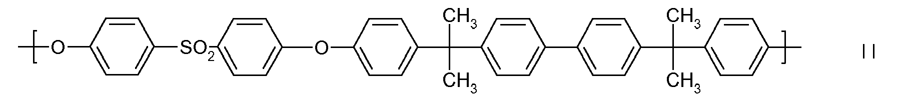

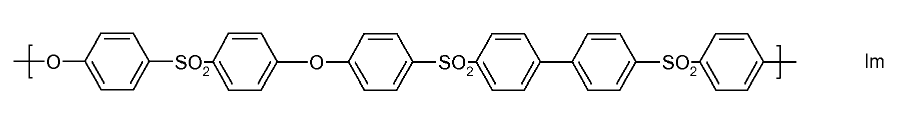

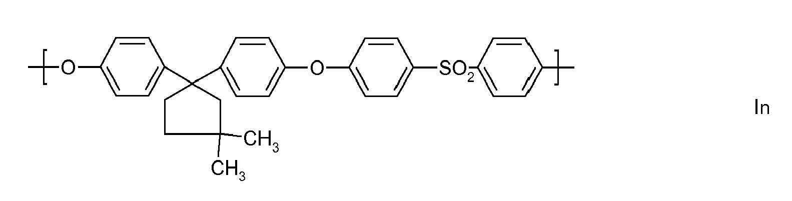

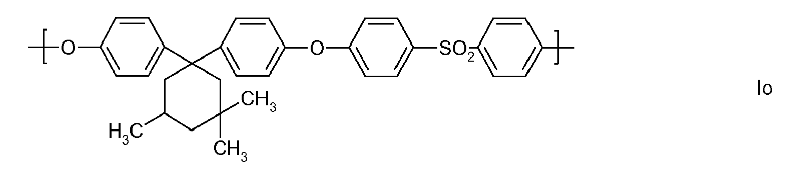

Zusätzlich zu den bevorzugt vorliegenden Bausteinen Ia bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen oder durch Naphthyleneinheiten, die von Dihydroxynaphthalin abstammen, ersetzt sind.

Als Bausteine der allgemeinen Formel I besonders bevorzugt sind die Bausteine Ia, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus Ia, Ig und Ik aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone werden als Polyphenylensulfon (PPSU) bezeichnet. In dieser besonders bevorzugten Ausführungsform besteht insbesondere sowohl Komponente (A1) als auch Komponente (A2) aus mindestens einem Polyarylenethersulfon des Typs PPSU.

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone werden als Polysulfon (PSU) bezeichnet. In dieser besonders bevorzugten Ausführungsform besteht insbesondere sowohl Komponente (A1) als auch Komponente (A2) aus mindestens einem Polyarylenethersulfon des Typs PPSU

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone werden als Polyethersulfon (PESU) bezeichnet. In dieser weiteren besonders bevorzugten Ausführungsform besteht insbesondere sowohl Komponente (A1) als auch Komponente (A2) aus mindestens einem Polyarylenethersulfon des Typs PESU.

Abkürzungen wie PPSU, PESU und PSU entsprechen im Rahmen der vorliegenden Erfindung der DIN EN ISO 1043-1:2001.

Im Allgemeinen weisen die bevorzugten Polyarylenether (A1) und (A2) mittlere Molekulargewichte Mₙ (Zahlenmittel) im Bereich von 5.000 bis 60.000 g/mol und relative Viskositäten von 0,20 bis 1,5 dl/g auf. Die relativen Viskositäten der Polyarylenether werden in 1 gew.-%iger N-Methylpyrrolidon-Lösung bei 25°C nach DIN EN ISO 1628-1 bestimmt.

Die Polyarylenether (A1) und (A2) der vorliegenden Erfindung weisen vorzugsweise gewichtsmittlere Molekulargewichte M_{W} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003 auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether (A1) entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente (A1) sind Halogen, insbesondere Chlor, Alkoxy, insbesondere Methoxy, Aryloxy, insbesondere Phenoxy, oder Benzyloxy.

Im Folgenden wird die Herstellung der Polyarylenether (A2) diskutiert. Ein bevorzugtes Verfahren zur Herstellung von Polyarylenethern der Komponente (A2) wird nachfolgend beschrieben und umfasst folgende Schritte in der Reihenfolge a-b-c:
(a) Bereitstellung mindestens eines Polyarylenethers (A2*) in Gegenwart eines Lösungsmittels (L), der eine der gewünschten Komponente (A2) entsprechenden Gehalt an phenolischen Endgruppen aufweist, wobei dessen phenolische Endgruppen als Phenolat-Endgruppen vorliegen, und der vorzugsweise aufgebaut ist aus Bausteinen der allgemeinen Formel I wie oben definiert,
(b) Zugabe mindestens einer Säure, vorzugsweise mindestens einer mehrfunktionellen Carbonsäure, und
(c) Gewinnung der Polyarylenether der Komponente (A2) als Feststoff.

Die Bereitstellung des Polyarylenethers (A2*) erfolgt dabei bevorzugt in Form einer Lösung im Lösungsmittel (L).

Die Bereitstellung der beschriebenen Polyarylenether (A2*) kann im Prinzip auf verschiedene Weise erfolgen. Beispielsweise kann ein entsprechender Polyarylenether (A2*) direkt mit einem geeigneten Lösungsmittel in Kontakt gebracht und direkt, d. h. ohne weitere Umsetzung, im erfindungsgemäßen Verfahren eingesetzt werden. Alternativ können Präpolymere von Polyarylenethern eingesetzt und zur Umsetzung in Gegenwart eines Lösungsmittels gebracht werden, wobei die beschriebenen Polyarylenether (A2*) in Gegenwart des Lösungsmittels entstehen.

Die Bereitstellung des Polyarylenethers oder der Polyarylenether (A2*) in Schritt (a) erfolgt jedoch vorzugsweise durch Umsetzung mindestens einer Ausgangsverbindung der Struktur X-Ar^{a}-Y (s1) mit mindestens einer Ausgangsverbindung der Struktur HO-Ar^{b}-OH (s2) in Gegenwart eines Lösungsmittels (L) und einer Base (B), wobei
- Y ein Halogenatom ist,
- X ausgewählt wird aus Halogenatomen und OH und
- Ar^{a} und Ar^{b} unabhängig voneinander eine Arylengruppe mit 6 bis 18 Kohlenstoffatomen darstellen.

Das Verhältnis von (s1) und (s2) wird dabei so gewählt, dass der gewünschte Gehalt an phenolischen Endgruppen entsteht. Geeignete Ausgangsverbindungen sind dem Fachmann bekannt oder können nach bekannten Methoden hergestellt werden. Hydrochinon, Resorcin, Dihydroxynaphthalin, insbesondere 2,7- Dihydroxynaphthalin, 4,4'-Dihydroxydiphenylsulfon, Bisphenol A und 4,4'-Dihydroxybiphenyl sind als Ausgangsverbindung (s2) besonders bevorzugt.

Es ist prinzipiell auch möglich, in begrenztem Umfang trifunktionelle Verbindungen zu verwenden. In diesem Fall entstehen verzweigte Strukturen. Sofern eine trifunktionelle Ausgangsverbindung (s2) zum Einsatz kommt, ist 1,1,1-Tris(4-hydroxyphenyl)ethan bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an (s2) zu bevorzugen.

Besonders bevorzugt beträgt das Molverhältnis (s2)/(s1) in dieser Ausführungsform von 1,005 bis 1,2, insbesondere 1,01 bis 1,15, ganz besonders bevorzugt 1,02 bis 1,1.

Alternativ kann auch eine Ausgangsverbindung (s1) mit X = Halogen und Y = OH eingesetzt werden. In diesem Fall erfolgt die Einstellung eines Überschusses von Hydroxygruppen durch Zugabe der Ausgangsverbindung (s2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation mindestens 0,9, wodurch ein ausreichend hohes Molekulargewicht gewährleistet wird. Sofern als Vorstufe des Polyarylenethers ein Präpolymer verwendet wird, bezieht sich der Polymerisationsgrad auf die Zahl der eigentlichen Monomere.

Bevorzugte Lösungsmittel (L) sind aprotische polare Lösungsmittel. Geeignete Lösungsmittel weisen außerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan, N-Ethyl-2-pyrrolidon und N-Methyl-2-pyrrolidon.

Vorzugsweise erfolgt die Umsetzung der Ausgangsverbindungen (s1) und (s2) in den genannten aprotischen polaren Lösungsmitteln (L), insbesondere N-Methyl-2-pyrollidon.

Dem Fachmann ist an sich bekannt, dass die Umsetzung der phenolischen OH-Gruppen vorzugsweise in Gegenwart einer Base (B) erfolgt, um die Reaktivität gegenüber den Halogensubstituenten der Ausgangsverbindung (s1) zu erhöhen.

Vorzugsweise sind die Basen (B) wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist.

Eine besonders bevorzugte Kombination ist N-Methyl-2-pyrrolidon als Lösungsmittel (L) und Kaliumcarbonat als Base (B).

Die Umsetzung der geeigneten Ausgangsverbindungen (s1) und (s2) wird bei einer Temperatur von 80 bis 250°C, bevorzugt 100 bis 220°C durchgeführt, wobei die Obergrenze der Temperatur durch den Siedepunkt des Lösungsmittels begrenzt wird. Die Umsetzung erfolgt vorzugsweise in einem Zeitintervall von 2 bis 12 h, insbesondere von 3 bis 8 h.

Es hat sich als vorteilhaft erwiesen, in Anschluss an Schritt (a) und vor Ausführung des Schrittes (b) eine Filtration der Polymerlösung durchzuführen. Hierdurch wird der bei der Polykondensation gebildete Salzanteil sowie eventuell gebildete Gelkörper entfernt.

Es hat sich zudem als vorteilhaft herausgestellt, im Rahmen von Schritt (a) die Menge des Polyarylenethers (A2*) bezogen auf das Gesamtgewicht der Mischung aus Polyarylenether (A2*) und Lösungsmittel (L) von 10 bis 70 Gew.-%, vorzugsweise von 15 bis 50 Gew.-% einzustellen.

Im Rahmen von Schritt (b) erfolgt die Zugabe mindestens einer Säure, vorzugsweise mindestens einer mehrfunktionellen Carbonsäure zum Polyarylenether (A2*) aus Schritt (a), vorzugsweise zur Lösung des Polyarylenethers (A2*) im Lösungsmittel (L).

Unter "mehrfunktionell" ist eine Funktionalität von mindestens 2 zu verstehen. Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Carbonsäuren sind di- und trifunktionelle Carbonsäuren.

Die Zugabe der mehrfunktionellen Carbonsäure kann auf verschiedene Weise erfolgen, insbesondere in fester oder flüssiger Form oder in Form einer Lösung, vorzugsweise in einem Lösungsmittel, welches mit dem Lösungsmittel (L) mischbar ist.

Vorzugsweise weist die mehrfunktionelle Carbonsäure ein zahlenmittleres Molekulargewicht von höchstens 1500 g/mol, insbesondere höchstens 1200 g/mol auf. Gleichzeitig weist die mehrfunktionelle Carbonsäure vorzugsweise ein zahlenmittleres Molekulargewicht von mindestens 90 g/mol auf.

Geeignete mehrfunktionelle Carbonsäuren sind insbesondere solche gemäß der allgemeinen Struktur II:

HOOC-R-COOH (II),

wobei R eine chemische Bindung oder ein Kohlenwasserstoffrest mit von 1 bis 20 Kohlenstoffatomen repräsentiert, der optional weitere funktionelle Gruppen, vorzugsweise ausgewählt aus OH und COOH, enthält.

Bevorzugte mehrfunktionelle Carbonsäuren sind C₄ bis C₁₀-Dicarbonsäuren, insbesondere Bernsteinsäure, Glutarsäure, Adipinsäure, und Tricarbonsäuren, insbesondere Zitronensäure. Besonders bevorzugte mehrfunktionelle Carbonsäuren sind Bernsteinsäure und Zitronensäure.

Um eine ausreichende Umwandlung der Phenolat-Endgruppen in phenolische Endgruppen zu gewährleisten hat es sich als vorteilhaft erwiesen, die Menge der eingesetzten mehrfunktionellen Carbonsäure oder mehrfunktionellen Carbonsäuren in Bezug auf die Menge der Phenolat-Endgruppen einzustellen.

Es ist bevorzugt im Rahmen von Schritt (b) eine mehrfunktionelle Carbonsäure in einer Menge von 25 bis 200 mol-% Carboxylgruppen, vorzugsweise von 50 bis 150 mol-% Carboxylgruppen, besonders bevorzugt von 75 bis 125 mol-% Carboxylgruppen, bezogen auf die Stoffmenge an phenolischen Endgruppen zuzugeben.

Wird zu wenig Säure dosiert, ist das Fällverhalten der Polymerlösung ungenügend, während bei einer deutlichen Überdosierung eine Verfärbung des Produktes bei der weiteren Verarbeitung auftreten kann.

Im Rahmen von Schritt (c) erfolgt die Gewinnung des Polyarylenethers (A2) als Feststoff. Grundsätzlich kommen verschiedene Verfahren zur Gewinnung als Feststoff in Betracht. Bevorzugt ist jedoch eine Gewinnung der Polymerzusammensetzung durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich die Polymerzusammensetzung nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-2-pyrrolidon, und Wasser. Es ist bevorzugt, die Polymerlösung aus Schritt (b) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (a) in fein verteilter Form, insbesondere in Tropfenform.

Sofern als schlechtes Lösungsmittel (L') eine Mischung aus dem Lösungsmittel (L), insbesondere N-Methyl-2-pyrollidon, und einem Nicht-Lösungsmittel, insbesondere Wasser, verwendet wird, dann ist ein Mischungsverhältnis Lösungsmittel: Nicht-lösungsmittel von 1:2 bis 1:100, insbesondere 1:3 bis 1:50 zu bevorzugen.

Als schlechtes Lösungsmittel (L') ist eine Mischung aus Wasser und N-Methyl-2-pyrrolidon (NMP) in Kombination mit N-Methyl-2-pyrrolidon als Lösungsmittel (L) bevorzugt. Besonders bevorzugt ist als schlechtes Lösungsmittel (L') ein Gemisch NMP/Wasser von 1:3 bis 1:50, insbesondere 1:30.

Die Ausfällung erfolgt besonders effizient, wenn der Gehalt der Polymerzusammensetzung im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Komponente (A2) weist vorzugsweise einen Kaliumgehalt von höchstens 600 ppm auf. Der Kaliumgehalt wird mittels Atomspektrometrie bestimmt.

### Komponente B

Die thermoplastischen Formmassen der vorliegenden Erfindung enthalten mindestens einen faser- oder teilchenförmigen Füllstoff, vorzugsweise in einer Menge von mindestens 1, besonders bevorzugt mindestens 5 %, insbesondere mindestens 15 Gew.-% der Komponente (B), bezogen auf die Summe der Komponenten (A), (B) und (C). Die thermoplastischen Formmassen der vorliegenden Erfindung bestehen vorzugsweise zu höchstens 70, besonders bevorzugt höchstens 60 %, insbesondere höchstens 50 Gew.-% aus Komponente (B) bezogen auf die Summe der Komponenten (A), (B) und (C).

Die erfindungsgemäßen Formmassen können dabei insbesondere teilchenförmige oder faserförmige Füllstoffe enthalten, wobei faserförmige Füllstoffe besonders bevorzugt sind.

Bevorzugte faserförmige Füllstoffe sind Kohlenstofffasern, Kaliumtitanatwhisker, Aramidfasern und Glasfasern. Glasfasern sind als Komponente (B) ganz besonders bevorzugt.

Um eine gute Verarbeitbarkeit, Verträglichkeit und Verstärkungswirkung in der Polymer-Matrix zu erreichen, werden die bevorzugten Glasfasern beschlichtet, vorzugsweise bei ihrer Formgebung während des Faserziehprozesses und zwar mit einer mit Komponente (A) kompatiblen und die Haftungseigenschaften der Glasfasern verbessernden Schlichte. Entsprechende Schlichten sind dem Fachmann an sich bekannt.

Neben der grundsätzlichen Aufgabe der Schlichte, Schaffung eines Verbundes zwischen Faser und Polymer-Matrix, hat das Schlichtemittel zum Ziel, die Herstell- und Verarbeitbarkeit der Glasfasern sicherzustellen. Die Schlichte ist im allgemeinen eine wässrige Lösung oder Dispersion und besteht in der Regel mengenmäßig überwiegend aus einem oder mehreren Filmbildnern sowie einem oder mehreren Haftvermittlern und gegebenenfalls weiteren Zusätzen wie z.B. Gleitmittel, Netzmittel oder antistatisch wirkenden Substanzen usw. (siehe K. L. Loewenstein: The Manufacturing Technology of Continuous Glass Fibers, Elsevier Scientific Publishing Corp. Amsterdam, London, New York, 1973).

Beispiele für filmbildende Polymere sind Epoxypolymere, Polyesterpolymere, Polyurethane, Acrylpolymere, Vinylpolymere, Mischungen solcher Polymere und Copolymere von entsprechenden Monomeren, wobei Polyurethane besonders bevorzugt sind.

Die Kombination aus den oben genannten Filmbildnern, insbesondere Polyurethandispersionen, und Haftvermittlern, vorzugsweise Organosilanverbindungen wie zum Beispiel Aminoalkyltrialkoxysilane, ist besonders bevorzugt, da hierdurch eine gute Haftung zwischen der Komponente (A) und der Glasfaser, und damit gute mechanische Eigenschaften der aus diesen glasfaserverstärkten thermoplastischen Formmassen hergestellten Kunststoffteilen erreicht wird.

Im Allgemeinen haben die verwendeten Glasfasern einen Durchmesser im Bereich von 6 bis 20 µm. Der genannte bevorzugte Bereich der Durchmesser gilt auch bei Verwendung von Kohlenstofffasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 5 mm. Kohlenstoff-oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Bevorzugte teilchenförmige Füllstoffe sind solche, in denen mindestens 95 Gew.-%, bevorzugt mindestens 98 Gew.-% der Teilchen einen Durchmesser (größter Durchmesser durch das geometrische Zentrum), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt. Das Aspektverhältnis ist das Verhältnis von Teilchendurchmesser zu Dicke (größte Ausdehnung zu kleinster Ausdehnung jeweils durch das geometrische Zentrum).

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 µm beträgt, kann auch mittels Siebanalyse gemessen werden.

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

Die thermoplastischen Formmassen können außerdem weitere Zusatzstoffe und/oder Verarbeitungshilfsmittel als Komponente C enthalten.

### Komponente C

Die erfindungsgemäßen Formmassen können als Bestandteile der Komponente (C) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Komponente (C) umfasst vorzugsweise keine polymeren organischen Verbindungen, insbesondere nicht solche aus der Klasse der Polykondensate. Polyarylensulfide sind als Bestandteil der erfindungsgemäßen thermoplastischen Formmassen ausgeschlossen.

Der Anteil der Komponente (C) in der erfindungsgemäßen Formmasse beträgt insbesondere von 0 bis zu 40, vorzugsweise von 0 bis zu 30 Gew.-%, insbesondere 0 bis 20, ganz besonders bevorzugt von 0 bis 15 Gew.-%, bezogen auf das Gesamtgewicht der Komponenten (A) bis (C). Die bevorzugte Mindestmenge der Bestandteile der Komponente (C), sofern in den erfindungsgemäßen Formmassen enthalten, hängt von der Natur der enthaltenen Verbindungen ab.

Falls die Komponente E Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf die Summe der Gew.-% der Komponenten (A) bis (C).

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (C), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO_{3·}Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind dem Fachmann bekannt.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (C) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf die Summe der Gew.-% der Komponenten (A) bis (C) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (C)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (C) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Die Reihenfolge, in der die Komponenten (A) bis (C) gemischt werden, ist an sich beliebig. Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextruder, vorzugsweise Zweischneckenextruder, Brabender-Mischer, Banbury-Mischer oder Kneter mischt und anschließend extrudiert.

Nach der Extrusion wird das Extrudat abgekühlt und zerkleinert. Die Reihenfolge der Mischung der Komponenten kann variiert werden. Entsprechend können zwei oder mehr als zwei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 bis 30 Minuten bei Temperaturen von 290 bis 400°C, bevorzugt 300 bis 370°C, erforderlich. Nach der Extrusion wird das Extrudat in der Regel abgekühlt und zerkleinert.

Die erfindungsgemäßen thermoplastischen Formmassen können vorteilhaft zur Herstellung von Formteilen, Fasern, Schäumen oder Filmen verwendet werden. Die erfindungsgemäßen Formmassen eignen sich insbesondere zur Herstellung von Formteilen für Haushaltsartikel, elektrische oder elektronische Bauteile sowie zur Herstellung von Formteilen für den Fahrzeugsektor, insbesondere Automobil.

Die folgenden Beispiele erläutern die Erfindung näher, ohne sie einzuschränken.

### Beispiele

Durch Mischung der unten genannten Komponenten wurden die in Tabelle 1 dargestellten mit Glasfasern verstärkten thermoplastischen Formmassen hergestellt. Hierfür wurde ein Extruder des Typs ZSK 25 des Herstellers Coperion verwendet.

Die E-Moduli, die Reißfestigkeit und die Reißdehnung der Proben wurden im Zugversuch nach ISO 527 an Schulterstäben ermittelt.

Die Schlagzähigkeit der Produkte wurde an ISO-Stäben nach ISO 179 1 eU bestimmt.

Die Viskositätszahl der Polyarylenether wurde in 1 %-iger Lösung von N-Methylpyrrolidon bei 25°C gemäß DIN EN ISO 1628-1 bestimmt.

Die Fließfähigkeit der thermoplastischen Formmassen wurde anhand der Schmelze-Volumenfließrate MVR bei einer Temperatur von 320°C und einer Masse von 21,6 kg nach EN ISO 1133 bestimmt. Die Aufschmelzzeit betrug 4 Minuten.

Zur Charakterisierung der Schmelzestabilität wurden folgende Parameter ermittelt:
1.) Messung des MVR-Wertes wie oben beschrieben nach einer Verweilzeit von 4 sowie 24 Minuten bei 400°C. Die resultierende Differenz des Wertes MVR(24 min) abzüglich MVR(4 min) wird im Verhältnis zum Wert MVR(4 min) in der Einheit % angegeben und in Tabelle als ΔMVR 24/4 abgekürzt.
2.) Es wurde die scheinbare Viskosität bei 410°C bei einer Scherrate von 1000 s⁻¹ als Funktion der Verweilzeit in einem Kapillarrheometer ermittelt. Dabei wurde die scheinbare Viskosität der Schmelze bei oben genannter Temperatur als Funktion der Scherrate in einem Kapillarviskosimeter (Göttfert Kapillarviskosimeter Rheograph 2003) mit einer Kreiskapillare der Länge 30 mm und einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Dies ermöglicht die Beurteilung der Schmelzestabilität bei hoher thermischer Belastung. Der Quotient zwischen dem Wert nach 30 beziehungsweise 45 Minuten und dem Ausgangswert (nach 5 Minuten) wurde bestimmt und wird in Tabelle 1 als η 30/5 bzw. η 45/5 abgekürzt.

### Komponente A1

Als Komponente A1-1 wurde ein Polyethersulfon des Typs PESU mit einer Viskositätszahl von 49,0 ml/g (Ultrason^{®} E 1010 der BASF SE) verwendet. Das verwendete Produkt wies 0,16 Gew.-% CI-Endgruppen und 0,21 Gew.-% OCH₃-Endgruppen auf.

Als Komponente A1-2 wurde ein Polyphenylensulfon auf Basis von Dichlordiphenylsulfon und 4,4-Dihydroxybiphenyl (PPSU) mit einer Viskositätszahl von 66,5 ml/g verwendet. Das Produkt wies 0,062 Gew.-% CI-Endgruppen und 0,42 Gew.-% OCH₃-Endgruppen auf.

### Komponente A2

Als Komponente A2-1 wurde ein Polyethersulfon (PESU) mit einer Viskositätszahl von 55,6 ml/g verwendet, welches 1,91 OH-Endgruppen pro Polymerkette (0,20 Gew.-% OH-Endgruppen) und 0,09 CI-Endgruppen pro Polymerkette (0,02 Gew.% CI-Endgruppen) aufwies.

Als Komponente A2-2 wurde ein Polyphenylensulfon (PPSU) mit einer Viskositätszahl von 66,8 ml/g verwendet, welches 1,97 OH-Endgruppen pro Polymerkette (170 mmol/g OH-Endgruppen) und 0,03 CI-Endgruppen pro Polymerkette (2 mmol/g CI-Endgruppen) aufwies.

Als Komponente A2-V3 wurde ein Polyethersulfon verwendet, welches wie folgt hergestellt wurde:

Unter Stickstoffatmosphäre wurden 577,03 g 4,4'-Dichlordiphenylsulfon, 495,34 4,4'-Dihydroxydiphenylsulfon und 5,73 g 4,4'-Bis-hydroxyphenylvaleriansäure in 1053 ml NMP gelöst und mit 297,15 g wasserfreiem Kaliumkarbonat versetzt. Die Reaktionsmischung wurde auf 190 °C erhitzt und 6 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weise Pulver wurde dann mehrfach mit heißem Wasser extrahiert und anschließend bei 140°C im Vakuum getrocknet. Der Anteil an DPA-Einheiten wurde zu 0,9 mol.-% bestimmt, die Viskositätszahl des Produkts war 46,9 ml/g.

Als Komponente A2-V4 wurde ein Polyethersulfon verwendet, welches wie folgt hergestellt wurde:

Unter Stickstoffatmosphäre wurden 589,95 g 4,4'-Dichlordiphenylsulfon, 368,70 4,4'-Di-Hydroxybiphenyl und 5,73 g 4,4'-Bis-hydroxyphenylvaleriansäure in 1538 ml NMP gelöst und mit 290,24 g wasserfreiem Kaliumkarbonat versetzt. Die Reaktionsmischung wurde auf 190 °C erhitzt und 4 h bei dieser Temperatur gehalten. Anschließend wurde der Ansatz mit 1462 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weise Pulver wurde dann mehrfach mit heißem Wasser extrahiert und anschließend bei 140°C im Vakuum getrocknet. Der Anteil an DPA-Einheiten wurde zu 0,87 mol.-% bestimmt, die Viskositätszahl des Produkts war 74 ml/g.

Als Komponente A2-V5 wurde ein Polyethersulfon verwendet, welches wie folgt hergestellt wurde:

Unter Stickstoffatmosphäre wurden 587,65 g 4,4'-Dichlordiphenylsulfon, 500,34 g 4,4'-Dihydroxydiphenylsulfon in 1053 ml NMP gelöst und mit 290,24 g wasserfreiem Kaliumkarbonat versetzt. Die Reaktionsmischung wurde auf 190 °C erhitzt und 6 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weise Pulver wurde dann mehrfach mit heißem Wasser extrahiert und anschließend bei 140°C im Vakuum getrocknet. Der Anteil an CI-Endgruppen betrug 0,365 Gew.% (103 mmol/kg), der Anteil an OH-Endgruppen 0,014 Gew.% (3,9 mmol/kg), die Viskositätszahl des Produkts war 51,2 ml/g.

### Komponente D

Als Komponente D-1 wurden Schnittglasfasern mit einer Stapellänge von 4,5 mm und einem Faserdurchmesser von 10 µm eingesetzt, die mit einer Polyurethanschlichte versehen waren.

**Tabelle 1: Eigenschaften der thermoplastischen Formmassen. Die Zusammensetzung der thermoplastischen Formmassen ist in Gewichtsteilen angegeben.**

| Komponente/Versuch | V1 | V2 | 3 | 4 | V5 | V6 | V7 | 8 | 9 |
|---|---|---|---|---|---|---|---|---|---|
| A1-1 | 70 | 65 | 65 | 62,5 | - | - | - | - | - |
| A1-2 | - | - | - | - | - | 70 | 65 | 65 | 62,5 |
| A2-1 | - | - | 5 | 7,5 | - | - | - | - | - |
| A2-2 | - | - | - | - | - | - | - | 5 | 7,5 |
| A2-V3 | - | 5 | - | - | - | - | - | - | - |
| A2-V4 | - | - | - | - | - | - | 5 | - | - |
| A2-V5 | - | - | - | - | 70 | - | - | - | - |
| D-1 | 30 | 30 | 30 | 30 | 30 | 30 | 30 | 30 | 30 |
| E-Modul [GPa] | 9,2 | 9,1 | 9,2 | 9,2 | 9,1 | 8,3 | 8,3 | 8,3 | 8,3 |
| Reißdehnung [%] | 2,1 | 2,4 | 2,4 | 2,5 | 2,1 | 2,3 | 2,9 | 2,7 | 2,8 |
| Reißfestigkeit [MPa] | 143 | 153 | 154 | 153 | 144 | 118 | 127 | 126 | 127 |
| ISO 179 1eU [kJ/m²] | 49 | 53 | 54 | 55 | 48 | 45 | 61 | 56 | 57 |
| MVR [ml/10min] (320°C, 21,6 kg) | 39 | 37 | 41 | 43 | 38 | 8,5 | 8,0 | 9,4 | 9,5 |
| ΔMVR24/4 400°C [%] | 31 | 26 | 12 | 10 | 56 | 43 | 40 | 30 | 26 |
| η 30/5 bei 410°C | 2,5 | 2,4 | 1,6 | 1,5 | 2,7 | 2,6 | 2,5 | 1,9 | 1,8 |
| η 45/5 bei 410°C | 4,7 | 4,6 | 3,1 | 3,0 | 4,9 | 5,7 | 5,1 | 3,4 | 3,2 |

Die erfindungsgemäßen Formmassen zeichnen sich durch deutlich verbesserte Schmelzstabilität bei gleichzeitig guten mechanischen Eigenschaften aus.

## Patentansprüche

1. Thermoplastische Formmassen bestehend aus folgenden Komponenten:
(A) mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette,
(B) mindestens ein faser- oder teilchenförmiger Füllstoff und
(C) optional weitere Zusatzstoffe und/oder Verarbeitungshilfsmittel.

2. Thermoplastische Formmassen nach Anspruch 1, wobei die Polyarylenether (A1) im Mittel höchstens 0,05 phenolische Endgruppen pro Polymerkette aufweisen.

3. Thermoplastische Formmassen nach Anspruch 1 oder 2, wobei die Polyarylenether (A2) im Mittel mindestens 1,7 phenolische Endgruppen pro Polymerkette aufweisen.

4. Thermoplastische Formmassen nach einem oder mehreren der Ansprüche 1 bis 3, bestehend aus 20 bis 92 Gew.-% der Komponente (A1), von 3 bis 20 Gew.-% der Komponente (A2), von 5 bis 60 Gew.-% der Komponente (B) und von 0 bis 40 Gew.-% der Komponente (C), wobei die Summe der Gew.-% der Komponenten (A), (B) und (C) 100 Gew.-% ergibt.

5. Thermoplastische Formmassen nach einem oder mehreren der Ansprüche 1 bis 4, wobei die Polyarylenether der Komponenten (A1) und (A2) Polyarylenethersulfone sind.

6. Thermoplastische Formmassen nach einem oder mehreren der Ansprüche 1 bis 5, wobei die Polyarylenether der Komponenten (A1) und (A2) unabhängig voneinander aufgebaut sind aus Bausteinen der allgemeinen Formel I: 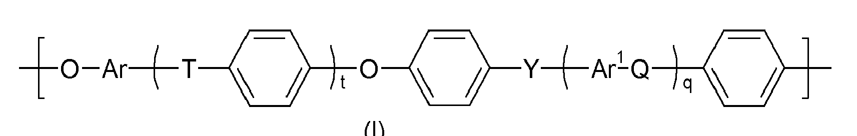 mit folgenden Bedeutungen
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy-oder C₆-C₁₈-Arylgruppe stehen, wobei wenigstens eines aus Q, T und Y von -O- verschieden ist, und wenigstens eines aus Q, T und Y für -SO₂- steht und
Ar, Ar¹: unabhängig voneinander C₆-C₁₈-Arylengruppe.

7. Thermoplastische Formmassen nach Anspruch 6, wobei die Polyarylenether (A1) und (A2) aus den gleichen Bausteinen gemäß der allgemeinen Formel I aufgebaut sind.

8. Thermoplastische Formmassen nach Anspruch 6 oder 7, wobei Q, T und Y in Formel (I) unabhängig voneinander ausgewählt sind aus -O- und -SO₂- und wenigstens eines aus Q, T und Y für -SO₂- steht.

9. Thermoplastische Formmassen nach einem oder mehreren der Ansprüche 6 bis 8, wobei Ar und Ar¹ in Formel (I) unabhängig voneinander ausgewählt sind aus der Gruppe bestehend aus 1,4-Phenylen, 1,3-Phenylen, Naphthylen und 4,4'-Bisphenylen.

10. Thermoplastische Formmassen nach einem oder mehreren der Ansprüche 1 bis 9, wobei Komponente (B) aus Glasfasern besteht.

11. Verfahren zur Herstellung von thermoplastischen Formmassen gemäß einem oder mehreren der Ansprüche 1 bis 10 umfassend das Vermischen der Komponenten (A) bis (C) in einer Mischvorrichtung.

12. Verwendung von thermoplastischen Formmassen gemäß einem oder mehreren der Ansprüche 1 bis 10 zu Herstellung von Formteilen, Fasern, Schäumen oder Filmen.

13. Formteile, Fasern, Schäume oder Filme enthaltend thermoplastische Formmassen gemäß einem oder mehreren der Ansprüche 1 bis 10.
